**Europäisches Patentamt**

**European Patent Office**

**Office européen des brevets**

(11) Numéro de publication: **0 394 075**

**A1**

# (12) DEMANDE DE BREVET EUROPEEN

(21) Numéro de dépôt: **90400183.1**

(22) Date de dépôt: **23.01.90**

(51) Int. Cl.5: **B64G 1/40, F17C 13/02, G01F 23/18**

Une requête en rectification de la révendication no. 1 a été présentée conformément à la règle 88 CBE. Il est statué sur cette requête au cours de la procédure engagée devant la division d'examen (Directives relatives à l'examen pratiqué à l'OEB, A-V, 2.2).

(30) Priorité: **21.04.89 FR 8905346**

(43) Date de publication de la demande:
**24.10.90 Bulletin 90/43**

(84) Etats contractants désignés:
**DE GB IT**

(71) Demandeur: **SOCIETE DE FABRICATION D'INSTRUMENTS DE MESURE (S.F.I.M.) 13, avenue Marcel Ramolfo-Garnier F-91301 Massy(FR)**

(72) Inventeur: **Silber, Gérard 15 Résidence de la Croix-Blanche F-91380 Chilly Mazarin(FR)**
Inventeur: **Renner, Gilles 21 Rue de Paris F-91120 Palaiseau(FR)**

(74) Mandataire: **Schrimpf, Robert et al Cabinet Regimbeau 26, Avenue Kléber F-75116 Paris(FR)**

(54) **Dispositif de jaugeage de gaz haute pression, en particulier pour la réserve d'oxygène gazeux embarquée à bord d'un avion.**

(57) L'invention concerne un dispositif de jaugeage de gaz haute pression (100), en particulier pour la réserve d'oxygène gazeux embarquée à bord d'un avion, associé à un réservoir ou à plusieurs réservoirs de gaz dont les sorties sont reliées entre elles.

Selon l'invention, chaque réservoir ($R_1$, $R_2$, $R_3$) est muni d'une part d'un régulateur de pression ($RP_1$, $RP_2$, $RP_3$) relié à une canalisation de sortie commune (104) et, d'autre part, d'un capteur de pression ($CP_1$, $CP_2$, $CP_3$) produisant un signal proportionnel à la pression régnant dans ledit ou lesdits réservoirs, ledit ou lesdits capteurs de pression étant relié(s) à une unité de calcul et de mémorisation (120) permettant de déterminer, à partir de valeurs mémorisées dans ladite unité pour différentes valeurs de la pression, le coefficient de compressibilité du gaz contenu dans chaque réservoir individuel et, par suite, la capacité disponible globale, ladite unité de calcul comportant, en outre, un indicateur (140) pour l'affichage de cette capacité disponible globale.

Application notamment au jaugeage de la réserve d'oxygène gazeux embarquée à bord des avions pour l'alimentation des boîtes à masques respiratoires.

FIG.3

## DISPOSITIF DE JAUGEAGE DE GAZ HAUTE PRESSION, EN PARTICULIER POUR LA RESERVE D'OXYGENE GAZEUX EMBARQUEE A BORD D'UN AVION.

L'invention concerne le jaugeage de gaz haute pression et, plus particulièrement, mais non exclusivement, le jaugeage de l'oxygène gazeux contenu dans des réservoirs embarqués à bord d'un avion.

Le terme "jaugeage" couramment utilisé par les spécialistes du domaine technique concerné désigne la détermination de la quantité ou capacité du gaz disponible dans les réservoirs, cette capacité s'exprimant en unités de masse, ou plus souvent dans certaines applications en litres.

On parle souvent, dans ce dernier cas, de litres NTPD, d'après la terminologie anglo-saxonne indiquant qu'il s'agit de litres mesurés pour un gaz sec, dans des conditions normalisées de température et de pression.

Le jaugeage exact d'un gaz haute pression contenu dans des réservoirs est rendu difficile dans certaines applications, en raison des variations de différents paramètres intervenant dans la détermination de la capacité des réservoirs. Ce problème est encore compliqué dans le cas particulier d'une réserve d'oxygène gazeux embarquée à bord d'un avion, car il faut faire face à des impératifs de sécurité au regard desquels la présence d'un circuit haute pression est un facteur particulièrement préoccupant.

Il est connu d'équiper un réservoir de gaz haute pression, en particulier un réservoir d'oxygène gazeux, d'un régulateur de pression parfois appelé aussi détendeur, dont la fonction est de réguler la pression de sortie à une valeur basse stabilisée, par exemple 0,5 MPa, et ce quel que soit le débit.

Lorsque l'on souhaite déterminer la capacité de ce réservoir, on monte en général un capteur de pression sur ce régulateur de pression. Un tel capteur, alimenté électriquement, délivre un signal proportionnel à la pression du gaz dans le réservoir. On utilise pour cela un capteur à membrane, ou à poutre déformable, ou à jauge de contrainte, ou encore un capteur piézo-résistif.

A ce capteur de pression est, en général, associé un indicateur analogique avec aiguille ou numérique, qui peut être gradué directement en pression, ou encore en pourcentage de la pression-réservoir qui correspond sensiblement au pourcentage du remplissage dudit réservoir.

Ceci permet d'apprécier la capacité de gaz du réservoir, en supposant constants les autres paramètres intervenant dans la détermination de ladite capacité, et notamment le coefficient de compressibilité et la température du gaz.

Ainsi, la mesure effectuée ne tient compte que de la pression du gaz, et non du coefficient de compressibilité z et de la température T du gaz : cette mesure est donc relativement peu précise.

Dans le cas particulier d'une réserve d'oxygène gazeux embarquée à bord d'un avion, les variations de ces deux paramètres z et T sont importantes (z varie environ de 1 à 0,9 et T de 258 à 328 °K), de sorte que l'imprécision des mesures s'en trouve encore accrue, et l'on peut estimer que l'erreur relative arrive à atteindre 25 % pour le réservoir concerné (la masse m de gaz est en effet donnée par la formule

$$m = \frac{P \cdot V}{z.r.T} \,,$$

dans laquelle P est la pression, V le volume, z le coefficient de compressibilité, r une constante fonction du gaz considéré, et T la température).

Le problème ci-dessus se retrouve naturellement dans le cas où l'on utilise plusieurs réservoirs de gaz haute pression dont les sorties sont reliées entre elles, ce qui est notamment le cas pour les réserves d'oxygène gazeux embarquées à bord des avions.

Deux types de montages sont classiquement utilisés dans le cas d'une pluralité de réservoirs.

La conception classique du système consiste à prévoir une canalisation commune haute pression à laquelle sont reliées les sorties de tous les réservoirs, menant d'une part à un régulateur de pression en aval duquel se trouve le circuit basse pression d'utilisation et, d'autre part, à un capteur unique délivrant un signal proportionnel à la pression régnant dans cette canalisation commune.

Ce capteur permet donc de mesurer la pression, et le signal correspondant est transmis à un indicateur gradué en pression, ou en pourcentage de remplissage, ou encore en litres NTPD (capacité) comme expliqué plus haut.

Dans certains cas, l'ensemble capteur-indicateur est remplacé par un manomètre, ce qui simplifie certes la structure, mais accroît encore l'imprécision de la mesure effectuée.

Une telle conception présente de nombreux inconvénients.

Tout d'abord, lorsqu'il s'agit de réservoirs contenant de l'oxygène gazeux, la présence d'un circuit contenant de l'oxygène gazeux à haute pression représente un danger en raison du risque d'auto-inflammation (notamment du fait des particules de graisse et/ou métalliques qui auraient pu échapper au nettoyage préalable du circuit), et des risques inhérents à la présence de connexions haute pression (risques de rupture, ou d'accrochage et même d'arrachage d'un tube).

Ce danger est particulièrement grave dans le cas d'une réserve d'oxygène gazeux embarquée à bord d'un avion car, outre les risques précités, dont l'incendie dans la soute de l'avion où sont disposés les réservoirs, l'avarie peut vider tous les réservoirs et réduire à néant l'autonomie en oxygène gazeux (les réservoirs ne sont naturellement pas prévus pour être rechargés en vol).

De plus, les mesures sont très imprécises, ainsi que cela a été expliqué plus haut, en raison d'une prise en compte de la seule pression du gaz dans les réservoirs. Dans le cas d'une réserve embarquée à bord d'un avion, le pilote peut alors difficilement apprécier la capacité réellement disponible des réservoirs d'oxygène gazeux avant de décoller, ce qui l'oblige à prévoir une marge de sécurité très importante.

Dans la pratique, si l'on souhaite avoir une détermination plus précise de la capacité des réservoirs, on utilise des tables pour corriger les mesures effectuées en tenant compte du coefficient de compressibilité et de la température du gaz, lorsqu'elle est connue : une telle démarche reste cependant lourde, et sujette à des erreurs d'appréciation.

On a, par ailleurs, cherché à rémédier à certains des inconvénients ci-dessus en modifiant la conception du système, notamment pour éviter la présence d'un circuit haute pression.

La conception modifiée consiste à équiper chaque réservoir d'un régulateur de pression, et d'un capteur de pression avec indicateur associé.

L'avantage réside alors dans le fait que les liaisons à la canalisation commune sont effectuées en aval des régulateurs de pression, de sorte que le circuit d'utilisation ne comprend plus de partie haute pression.

Cependant, le traitement est alourdi et la lecture compliquée. En effet, il est alors nécessaire d'effectuer la somme des capacités de tous les réservoirs pour avoir la capacité totale, ce qui est plus complexe, et aggrave encore l'imprécision puisque chaque mesure de capacité individuelle présente déjà une erreur importante (il ne s'agit en fait que d'une duplication du système à un réservoir déjà décrit plus haut). De plus, l'encombrement est nécessairement plus important, ce qui constitue un désavantage important dans le cas d'une réserve d'oxygène gazeux embarquée à bord d'un avion.

L'invention a pour objet de réaliser un dispositif de jaugeage ne présentant pas les inconvénients précités, en particulier permettant une limitation, voire une suppression, du réseau haute pression et autorisant une détermination à la fois précise et rapide de la capacité disponible globale des réservoirs.

L'invention a également pour objet de réaliser un dispositif de jaugeage donnant aisément une indication directe de la capacité disponible globale en litres NTPD, et permettant en outre d'afficher d'autres données, telles que les capacités disponibles de chaque réservoir individuel, et ce sans avoir à se reporter à des tables de correction.

Il s'agit plus particulièrement d'un dispositif de jaugeage de gaz haute pression, en particulier pour la réserve d'oxygène gazeux embarquée à bord d'un avion, associé à un réservoir ou à plusieurs réservoirs de gaz dont les sorties sont reliées entre elles, caractérisé par le fait que chaque réservoir individuel est muni d'une part d'un régulateur de pression relié à une canalisation de sortie commune et, d'autre part, d'un capteur de pression produisant un signal proportionnel à la pression régnant dans ledit ou lesdits réservoirs, le ou lesdits capteurs de pression étant relié(s) à une unité de calcul et de mémorisation permettant de déterminer, à partir de valeurs mémorisées dans ladite unité pour différentes valeurs de la pression, le coefficient de compressibilité du gaz contenu dans chaque réservoir individuel à partir du signal associé, et d'en déduire la capacité de chaque réservoir individuel et, par suite, la capacité disponible globale, ladite unité de calcul comportant en outre un indicateur pour l'affichage de cette capacité disponible globale.

Selon un mode de réalisation avantageux, le dispositif comporte en outre un capteur de température, relié à l'unité de calcul et de mémorisation et produisant un signal proportionnel à la température régnant au voisinage du ou des réservoirs, la détermination du coefficient de compressibité du gaz se faisant à partir de valeurs mémorisées dans ladite unité pour différentes valeurs de la pression et de la température. Dans le cas d'une réserve d'oxygène gazeux embarquée à bord d'un avion, la température captée sera la température de la soute dans laquelle sont disposés les réservoirs.

Plus particulièrement, et en vue d'améliorer encore la prise en compte du paramètre température, un capteur de température est associé à chaque réservoir, de sorte que la détermination du coefficient de compressibilité se fait, pour chaque réservoir individuel, à partir de valeurs mémorisées pour différentes valeurs de la pression et de la température.

Dans ce cas, on pourra prévoir que l'un au moins des capteurs de température est monté dans le régulateur de pression associé au réservoir concerné, de façon que le signal délivré corresponde précisément à la température du gaz dans ledit réservoir ; en variante, l'un au moins des capteurs de température est monté contre la paroi extérieure du réservoir concerné, ce qui est certes un peu moins précis qu'avec l'agencement précédent, mais reste très acceptable quand le système est stabilisé.

Il pourra s'avérer également avantageux, notamment dans le cas où l'on utilise des réservoirs de dimensionnements différents, on pourra prévoir un dispositif dans lequel les valeurs de volume en eau de chaque réservoir sont également mémorisées dans l'unité de calcul, de façon à intervenir dans le calcul de la capacité de chaque réservoir individuel.

Avantageusement, en outre, les valeurs de capacité résiduelle non utilisable de chaque réservoir sont également mémorisées dans l'unité de calcul et de mémorisation, de façon à pouvoir afficher la capacité disponible de chaque réservoir individuel. Ceci est, notamment, intéressant pour la maintenance du système, car il est alors aisé d'identifier la capacité disponible globale dans les réservoirs.

De préférence, l'unité de calcul et de mémorisation comporte une table de transcodage à trois valeurs d'entrée associées à la pression, à la température et au volume en eau pour chaque chaque réservoir individuel, et une valeur de sortie qui est la capacité en gaz de chaque réservoir individuel.

Dans ce cas, le signal de température envoyé à l'unité de calcul et de mémorisation comportant une table de transcodage provient d'un capteur de température unique disposé au voisinage du ou des réservoirs, ou provient d'un capteur de température associé à chaque réservoir et monté dans le régulateur de pression correspondant, ou encore provient d'un capteur de température associé à chaque réservoir et monté contre la paroi extérieure dudit réservoir.

Avantageusement enfin, l'indicateur d'affichage de la capacité disponible globale permet une lecture directe en litres NTPD (c'est-à-dire correspondant à un gaz sec, dans des conditions normalisées de température et de pression).

D'autres caractéristiques et avantages de l'invention apparaîtront plus clairement à la lumière de la description qui va suivre et du dessin annexé, concernant un mode de réalisation particulier, en référence aux figures où :

- les figures 1 et 2 sont des vues schématiques illustrant deux conceptions connues à plusieurs réservoirs dont l'agencement a été précédemment commenté ;

- la figure 3 est une vue schématique illustrant un dispositif conforme à l'invention, associé ici à trois réservoirs, avec une unité de calcul et de mémorisation représentée par un bloc calculateur recevant les signaux provenant de capteurs de pression associés à chaque réservoir et d'un capteur de température, et par un tableau de mémoire faisant partie d'une table de transcodage ;

- les figures 4 et 5 illustrent deux variantes du dispositif de la figure 3, pour lesquelles il est prévu un capteur de température associé à chaque réservoir, en étant respectivement monté dans le régulateur de pression du réservoir correspondant, ou contre la paroi extérieure dudit réservoir.

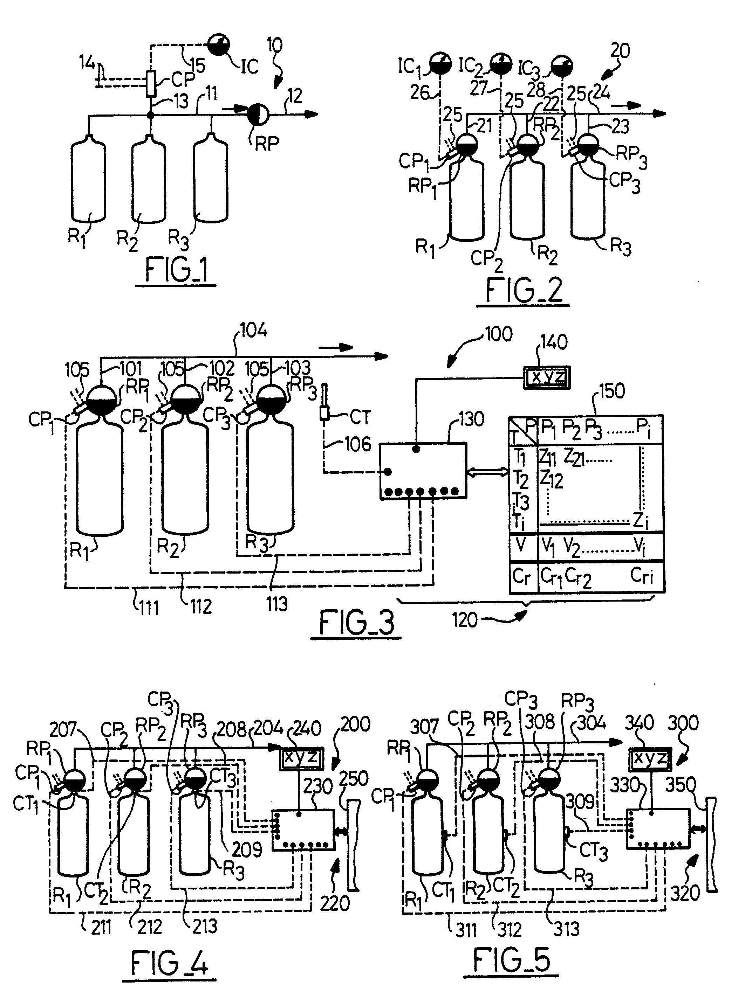

La figure 1 illustre une conception connue de dispositif de jaugeage, associé à trois réservoirs de gaz dont les sorties sont reliées entre elles.

On distingue ainsi un dispositif 10, avec trois réservoirs $R_1, R_2, R_3$ dont les sorties sont reliées à une canalisation commune 11, qui est donc une canalisation haute pression, menant à un régulateur de pression RP en aval duquel se trouve le circuit 12 d'utilisation basse pression (servant par exemple à alimenter les boîtes à masques dans le cas d'une réserve d'oxygène gazeux embarquée à bord d'un avion). Un capteur unique de pression CP est relié à la canalisation commune 11, par exemple un capteur électrique, avec une alimentation 14, et une sortie 15 menant à un indicateur unique de capacité, avec par exemple un affichage en litres NTPD.

Avec un dispositif tel que le dispositif 10 illustré en figure 1, on constate, outre la présence d'un réseau haute pression (canalisation 11), que la mesure de la capacité globale est déterminée en ne prenant en compte que le paramètre de pression du gaz, selon une simple application globale de la formule :

$$m = \frac{P.V}{z.r.T},$$

correspondant dans cette hypothèse à m = k.P où k est une constante prédéterminée.

On a vu plus haut que la détermination de la capacité disponible globale est très imprécise avec une telle conception.

La figure 2 illustre une variante du dispositif précité.

Selon cette autre conception connue, le dispositif 20 est associé à trois réservoirs $R_1, R_2, R_3$, dont chacun est respectivement équipé d'un régulateur de pression $RP_1, RP_2, RP_3$ et d'un capteur de pression $CP_1, CP_2, CP_3$.

Dans ce cas, les sorties 21,22,23 des régulateurs de pression sont reliées à une canalisation basse pression : ceci permet d'éviter la présence d'un réseau haute pression, avec les inconvénients déjà mentionnés plus haut pour le cas de l'oxygène gazeux.

Chaque capteur électrique de pression $CP_1, CP_2, CP_3$ présente une alimentation 25, et une sortie respective 26,27,28 menant à un indicateur individuel de capacité associé $IC_1, IC_2, IC_3$.

Avec un dispositif de ce type, on dispose d'une indication de chaque capacité individuelle, mais cette indication est peu précise dans la mesure où l'on ne prend en compte que le paramètre de pression (individuelle dans ce cas) ; de plus, il est encore nécessaire de faire la somme de ces capacités individuelles pour avoir une indication de la capacité globale, ce qui alourdit très sensiblement le traitement et aggrave encore l'imprécision de la détermination finale, ainsi que cela a été déjà expliqué plus haut.

La figure 3 illustre un dispositif de jaugeage 100 conforme à l'invention, associé ici à trois réservoirs $R_1,R_2,R_3$ (ce qui ne constitue naturellement qu'un exemple).

Dans le dispositif 100, chaque réservoir individuel $R_1,R_2,R_3$ est muni d'une part d'un régulateur de pression respectivement $RP_1,RP_2,RP_3$ relié par une sortie associée 101,102,103 à une canalisation de sortie commune 104 et, d'autre part, à un capteur de pression respectivement $CP_1,CP_2,CP_3$ (par exemple un capteur électrique avec son alimentation 105) produisant un signal proportionnel à la pression régnant dans ledit réservoir. Ainsi, comme pour le dispositif de la figure 2, on parvient à supprimer toute présence de réseau haute pression, ce qui est tout particulièrement avantageux lorsqu'il s'agit de l'oxygène gazeux constituant une réserve embarquée à bord d'un avion, ainsi que cela a déjà été expliqué plus haut.

Cependant, à la différence du dispositif de la figure 2, les capteurs de pression $CP_1,CP_2,CP_3$ sont ici reliés à une unité de calcul et de mémorisation 120 permettant de déterminer, à partir de valeurs mémorisées dans ladite unité pour différentes valeurs de la pression, le coefficient de compressibilité du gaz contenu dans chaque réservoir individuel à partir du signal associé, et d'en déduire la capacité de chaque réservoir individuel et, par suite, la capacité disponible globale, ladite unité de calcul comportant en outre un indicateur 140 pour l'affichage de cette capacité disponible globale.

L'unité 120 comporte ici un bloc 130 schématisant un calculateur et un tableau de mémoire 150 faisant partie d'une table de transcodage.

Des liaisons 111,112,113 relient le calculateur 120 à chaque capteur de pression $CP_1,CP_2,CP_3$, de façon que les signaux en tension produits par ces capteurs de pression puissent être traduits en valeurs de pression par ledit calculateur.

Dans le cas le plus général, la table de transcodage 150 est à trois valeurs d'entrée associées à la pression, à la température et au volume en eau pour chaque réservoir individuel, et une valeur de sortie qui est la capacité en gaz de chaque réservoir individuel affectée des coefficients de correction délivrés par le calculateur.

En effet, la mémoire a été organisée de façon à donner une correspondance entre une succession de valeurs de la pression $P_1,P_2,P_3... P_i...$, et le

coefficient de compressibilité du gaz $z_1,z_2,z_3,...z_i...$ correspondant. Il est alors aisé d'obtenir, pour chaque réservoir individuel, le coefficient de compressibilité associé (lorsque la pression calculée se situe entre deux valeurs de pression successives mémorisées, cette pression sera extrapolée à partir des valeurs mémorisées les plus proches).

L'unité 120 permet ainsi de calculer la capacité $C_i$ de chaque réservoir $R_i$ en prenant en compte les valeurs associées de la pression $P_i$ et du coefficient de compressibilité $z_i$, à partir du rapport

$$\frac{\dot{P}_i.V}{z_i.r.T}$$

Il est alors aisé d'en déduire la capacité totale $C$ en faisant la somme des capacités individuelles $C_i$ ainsi calculées, puis de calculer la capacité globale disponible $C_d$ qui est égale à $C - C_r$ où $C_r$ représente la capacité non utilisable (correspondant au seuil déterminé par les régulateurs de pression, par exemple 0,5 MPa), et l'indicateur 140 permet une lecture directe de cette mesure, de préférence exprimée en litres NTPD.

Il est cependant intéressant de tenir également compte de la température dans la détermination du coefficient de compressibilité du gaz, et de la capacité de chaque réservoir.

Ainsi qu'illustré à la figure 3, le système d'acquisition du dispositif 100 est alors complété en prévoyant un capteur de température CT relié par une ligne 106 au calculateur 130 de l'unité de calcul et de mémorisation 120, et produisant un signal proportionnel à la température régnant au voisinage des réservoirs $R_1,R_2,R_3$. Dans le cas d'une réserve d'oxygène gazeux embarquée à bord d'un avion, la température T ainsi captée sera la température de la soute dans laquelle sont disposés les réservoirs.

Le capteur CT pourra par exemple être un capteur résistif (avec une sonde en platine) ou un thermocouple.

L'unité 120 peut alors permettre une détermination plus précise du coefficient de compressibilité du gaz pour chaque réservoir individuel à partir de valeurs mémorisées pour différentes valeurs de la pression et de la température. La table de transcodage 150 est dans ce cas à trois valeurs d'entrée associées à la pression et au volume en eau de chaque réservoir individuel, et à la température régnant au voisinage des réservoirs, et à une valeur de sortie qui est la capacité en gaz de chaque réservoir individuel.

La mémoire est alors organisée de façon plus complète, en donnant des valeurs du coefficient de compressibilité du gaz $z_{11},z_{12},z...,z_{21},z_{22},...$ pour

des successions de valeurs de la pression $P_1, P_2, \ldots$ et de la température $T_1, T_2, \ldots$

La détermination précédente pour un réservoir $R_i$ est alors complétée en sélectionnant dans la colonne relative à la pression calculée, la valeur $z_i$ extrapolée à partir des valeurs de $z$ mémorisées pour la température détectée par le capteur CT.

La suite du processus de détermination de la capacité globale disponible est alors identique à la précédente, si ce n'est que, dans l'expression

$$\frac{P_i \cdot V}{z_i \cdot r \cdot T},$$

la température $T$ correspond à celle détectée par le capteur CT aul voisinage des réservoirs.

La mesure est alors nettement plus précise, surtout si la température risque de varier sur une plage importante, ce qui est le cas pour une réserve d'oxygène gazeux embarquée à bord d'un avion (la plage habituellement retenue va de 258 à 328° K).

Il est naturellement possible d'affiner la mesure de la température, en prévoyant une mesure plus précise associée à chaque réservoir individuel, ainsi qu'illustré aux figures 4 et 5.

Un capteur de température $CT_1, CT_2, CT_3$ est, dans ce cas, associé à chaque réservoir $R_1, R_2, R_3$, de sorte que la détermination du coefficient de compressibilité se fait pour chaque réservoir individuel à partir des valeurs mémorisées pour différentes valeurs de la pression et de la température.

Dans le dispositif 200 illustré à la figure 4 (les organes identiques à ceux du dispositif de la figure 3 ont été affectés des mêmes références augmentées de cent), l'un au moins des capteurs de température (ici les trois capteurs $CT_1, CT_2, CT_3$) est monté dans le régulateur de pression associé au réservoir concerné, de façon que le signal délivré corresponde précisément à la température du gaz dans ledit réservoir. Chaque capteur de température $CT_1, CT_2, CT_3$ est relié par une ligne respective 207, 208, 209 au calculateur 230 de l'unité de calcul et de mémorisation 220 comportant une table de transcodage 250.

Dans le dispositif 300 illustré à la figure 5 (les organes identiques à ceux du dispositif de la figure 3 ont été affectés des mêmes références augmentées de deux cents), l'un au moins des capteurs de température (ici les trois capteurs $CT_1, CT_2, CT_3$) est monté directement contre la paroi extérieure du réservoir concerné : on retrouve naturellement dans ce cas les lignes de liaison 307, 308, 309 au calculateur 330 de l'unité de calcul et de mémorisation 320 comportant une table de transcodage 350. Ce dernier dispositif est naturellement un peu moins précis que le précédent, mais il sera souvent suffisant quand le système est stabilisé.

Pour ce qui est de l'organisation de la mémoire des unités 220 et 320 de ces deux dispositifs 200 et 300, on pourra utiliser celle déjà décrite pour le dispositif 100 au regard de la figure 3, si ce n'est que des valeurs de température $T_i$ associées à chaque réservoir individuel (et non plus une valeur unique $T$) sont utilisées pour déterminer chaque fois le coefficient de compressibilité $z_i$ pour les réservoirs pris individuellement.

Ainsi, dans le cas de la figure 5, l'unité de calcul et de mémorisation 320 comporte une table de transcodage 350 à trois valeurs d'entrées associées à la pression et au volume en eau de chaque réservoir individuel et à la température régnant au voisinage direct de chacun des réservoirs, et une valeur de sortie qui est la capacité en gaz de chaque réservoir individuel ; de même, dans le cas de la figure 4, l'unité de calcul et de mémorisation 220 comporte une table de transcodage 250 à trois valeurs d'entrée associées à la pression, au volume en eau, et à la température dans chaque réservoir individuel, et une valeur de sortie qui est la capacité en gaz de chaque réservoir individuel.

Les unités 220 et 320 permettent ainsi de calculer la capacité $C_i$ de chaque réservoir $R_i$ en prenant en compte les valeurs associées de la pression $P_i$, de la température $T_i$, et du coefficient de compressibilité $z_i$, à partir du rapport

$$\frac{P_i \cdot V}{z_i \cdot r \cdot T_i} \, .$$

Il est alors aisé d'en déduire la capacité totale $C$ en faisant la somme des capacités individuelles $C_i$ ainsi calculées, puis de déterminer la capacité globale disponible $Cd = C - C_r$, et les indicateurs 240, 340 permettent alors une lecture directe de cette mesure, de préférence exprimée en litres NTPD.

Il est naturellement possible de faire également intervenir le volume de chaque réservoir dans la détermination des capacités individuelles, c'est-à-dire le volume en eau correspondant à un remplissage à pression atmosphérique.

Une façon simple de procéder consiste à rentrer en mémoire les volumes en eau $V_1, V_2, \ldots$ de chaque réservoir, comme indiqué sur le tableau complémentaire illustré à la figure 3.

Il serait également possible d'affiner encore le processus en utilisant un calcul de chaque volume de la pression intérieure associée (pour tenir compte de la dilatation du réservoir) d'après un programme de calcul déterminé à l'avance.

Dans ce cas, la capacité $C_i$ de chaque réservoir $R_i$ est calculée en prenant en compte les valeurs associées de la pression $P_i$, de la température $T_i$, du volume $V_i$, et du coefficient de compressibilité $z_i$, à partir du rapport

$$\frac{P_i \cdot V_i}{z_i \cdot r \cdot T_i}.$$

La détermination de la capacité globale C, et enfin de la capacité globale disponible $C_d$ est par ailleurs obtenue de la même façon que précédemment.

Il est enfin également possible d'utiliser l'unité de calcul et de mémorisation pour obtenir d'autres renseignements : par exemple, les valeurs de capacité résiduelle non utilisables $C_{ri}$ peuvent être mémorisées de façon à pouvoir aisément afficher la capacité disponible $C_{di}$ de chaque réservoir individuel $R_i$, à partir de l'expression $C_{di} = C_i - C_{ri}$.

Ceci peut être avantageux pour la maintenance du système, car il est alors aisé d'identifier rapidement et avec certitude le taux de remplissage effectif de chaque réservoir.

Il va de soi que tout ce qui précède s'applique aisément au cas particulier d'un réservoir unique, par exemple le réservoir $R_1$ : il n'y aura alors qu'un seul régulateur de pression $RP_1$, un seul capteur de pression $CP_1$, et un seul capteur de température CT (figure 3), ou $CT_1$ monté soit dans le régulateur de pression $RP_1$ (figure 4), soit contre la paroi extérieure du réservoir $R_1$ (figure 5).

Le dispositif de l'invention apparaît finalement comme un équipement très avantageux, en particulier lorsqu'il s'agit de la réserve d'oxygène gazeux embarquée à bord d'un avion : le pilote peut en effet avoir, à tout moment, une lecture précise et directe de la capacité disponible globale, notamment lors de l'établissement de son plan de vol, et éventuellement d'autres renseignements supplémentaires pour chaque réservoir.

L'invention n'est pas limitée au mode de réalisation qui vient d'être décrit, mais englobe, au contraire, toute variante reprenant, avec des moyens équivalents, les caractéristiques essentielles figurant aux revendications.

## Revendications

1. Dispositif de jaugeage de gaz haute pression (100;200;300), en particulier pour la réserve d'oxygène gazeux embarquée à bord d'un avion, associé à un réservoir ou à plusieurs réservoirs de gaz dont les sorties sont reliées entre elles, caractérisé par le fait que chaque réservoir individuel $(R_1,R_2,R_3)$ est muni d'une part d'un régulateur de pression $(RP_1,RP_2,RP_3)$ produisant un signal proportionnel à la pression régnant dans ledit ou lesdits réservoirs, ledit ou lesdits capteurs de pression étant relié(s) à une unité de calcul et de mémorisation (120;220;320) permettant de déterminer, à partir de valeurs mémorisées dans ladite unité pour différentes valeurs de la pression, le coefficient de compressibilité du gaz contenu dans chaque réservoir individuel à partir du signal associé, et d'en déduire la capacité de chaque réservoir individuel et, par suite, la capacité disponible globale, ladite unité de calcul comportant en outre un indicateur (140;240;340) pour l'affichage de cette capacité disponible globale.

2. Dispositif selon la revendication 1, caractérisé en ce qu'il comporte en outre un capteur de température (CT), relié à l'unité de calcul et de mémorisation (120) et produisant un signal proportionnel à la température régnant au voisinage du ou des réservoirs $(R_1,R_2,R_3)$, la détermination du coefficient de compressibilité du gaz se faisant à partir de valeurs mémorisées dans ladite unité pour différentes valeurs de la pression et de la température.

3. Dispositif selon la revendication 2, caractérisé par le fait qu'un capteur de température $(CT_1,CT_2,CT_3)$ est associé à chaque réservoir $(R_1,R_2,R_3)$, de sorte que la détermination du coefficient de compressibilité se fait, pour chaque réservoir individuel, à partir de valeurs mémorisées pour différentes valeurs de la pression et de la température.

4. Dispositif (200) selon la revendication 3, caractérisé par le fait que l'un au moins des capteurs de température $(CT_1,CT_2,CT_3)$ est monté dans le régulateur de pression $(RP_1,RP_2,RP_3)$ associé au réservoir $(R_1,R_2,R_3)$ concerné, de façon que le signal délivré corresponde précisément à la température du gaz dans ledit réservoir.

5. Dispositif (300) selon la revendication 3, caractérisé par le fait que l'un au moins des capteurs de température $(CT_1,CT_2,CT_3)$ est monté contre la paroi extérieure du réservoir $(R_1,R_2,R_3)$ concerné.

6. Dispositif selon l'une revendications 1 à 5, caractérisé par le fait que les valeurs de volume en eau de chaque réservoir $(R_1,R_2,R_3)$ sont également mémorisées dans l'unité de calcul et de mémorisation (120;220;320), de façon à intervenir dans le calcul de la capacité de chaque réservoir individuel.

7. Dispositif selon l'une des revendications 1 à 6, caractérisé par le fait que les valeurs de capacité résiduelle non utilisable de chaque réservoir $(R_1,R_2,R_3)$ sont également mémorisées dans l'unité de calcul et de mémorisation (120;220;320), de façon à pouvoir afficher la capacité disponible de chaque réservoir individuel.

8. Dispositif selon l'une des revendications 1 à 7, caractérisé par le fait que l'unité de calcul et de mémorisation (120;220;320) comporte une table de transcodage (150;250;350) à trois valeurs d'entrée associées à la pression, à la température et au volume en eau pour chaque réservoir individuel, et une valeur de sortie qui est la capacité en gaz de chaque réservoir individuel.

9. Dispositif selon les revendications 2 et 8, caractérisé par le fait que le signal de température envoyé à l'unité de calcul et de mémorisation (120) comportant une table de transcodage (150) provient d'un capteur de température (CT) unique disposé au voisinage du ou des réservoirs ($R_1$,$R_2$,$R_3$).

10. Dispositif selon les revendications 4 et 8, caractérisé par le fait que le signal de température envoyé à l'unité de calcul et de mémorisation (220) comportant une table de transcodage (250) provient d'un capteur de température ($CT_1$,$CT_2$,$CT_3$) associé à chaque réservoir ($R_1$,$R_2$,$R_3$) et monté dans le régulateur de pression correspondant ($RP_1$,$RP_2$,$RP_3$).

11. Dispositif selon les revendications 5 et 8, caractérisé par le fait que le signal de température envoyé à l'unité de calcul et de mémorisation (320) comportant une table de transcodage (350) provient d'un capteur de température ($CT_1$,$CT_2$,$CT_3$) associé à chaque réservoir ($R_1$,$R_2$,$R_3$) et monté contre la paroi extérieure dudit réservoir.

12. Dispositif selon l'une des revendications 1 à 11, caractérisé par le fait que l'indicateur (140;240;340) d'affichage de la capacité disponible globale permet une lecture directe en litres NTPD (c'est-à-dire correspondant à un gaz sec, dans des conditions normalisées de température et de pression).

FIG_1

FIG_2

FIG_3

FIG_4

FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 609 701  (SIEMENS)<br>* Résumé; figure * | 1 | B 64 G   1/40<br>F 17 C  13/02<br>G 01 F  23/18 |
| A | EP-A-0 093 275  (ROCKWELL INTERNATIONAL CORP.)<br>* Résumé; page 2, ligne 11 - page 3, ligne 2; figure 1 * | | |
| A | US-A-4 646 940  (R.A. KRAMER et al.)<br>* Résumé; figure 4 * | | |

**DOMAINES TECHNIQUES RECHERCHES (Int. Cl.5)**

B 64 G
F 17 C
G 01 F

Le présent rapport a été établi pour toutes les revendications

| Lieu de la recherche | Date d'achèvement de la recherche | Examinateur |
|---|---|---|
| LA HAYE | 25-07-1990 | SIEM T.D. |